# FASCICULE DE BREVET EUROPEEN

(11) **EP 0 914 763 B1**
(45) Date de publication et mention de la délivrance du brevet: **05.03.2003**
(21) Numéro de dépôt: 98440247.9
(22) Date de dépôt: 02.11.1998
(51) Int. Cl.: A01C 5/06

(54) **Soc à disques pour semoirs**
Scheibenschar für Sämaschine
Disc coulter for seed drills

(30) Priorité: 04.11.1997 FR 9714001
(43) Date de publication de la demande: 12.05.1999
(73) Titulaire: KUHN S.A., 67706 Saverne Cedex (FR)
(72) Inventeur: Klein, Jean, 67330 Bouxwiller (FR); Oberle, Edmond, 67700 Saverne (FR)

(56) Documents cités:
- EP-A- 0 579 909
- EP-A- 0 772 963
- WO-A-81/03410
- DE-U- 29 801 820
- FR-A- 2 413 864
- GB-A- 819 053
- US-A- 2 815 991

## Description

La présente invention se rapporte au domaine technique général des machines agricoles du type semoirs, ou à tout autre type de machines, travaillant le sol et munies d'un dispositif pour semer, ou combinées avec un tel dispositif.

L'invention concerne plus particulièrement un semoir pourvu de socs à disques utilisés pour les opérations de semis. De tels socs à disques sont soit intégrés directement au semoir, soit réalisés sous forme de dispositif annexe, éventuellement amovible, rapporté sur un semoir, ou sur une machine adaptée pour procéder à des opérations de semis. L'invention s'applique donc à divers types de machines, et par conséquent à des conditions de semis particulières ou variées.

Il est déjà connu de réaliser un soc à disques pour semoir comportant:
- un disque principal pour creuser un sillon dans le sol,
- un disque secondaire pour garder ledit sillon ouvert sur une distance suffisante pour déposer une ou plusieurs graines,
et
- un organe de soutien supportant les disques, lesquels sont montés libres en rotation et inclinés de manière que leurs périphéries se rejoignent dans une zone localisée dans la partie avant basse dudit soc, qui sert à creuser le sillon.

En effet, on connaît par l'intermédiaire du document EP-A-0 579 909 un disque semeur pourvu d'une fixation de soc, laquelle supporte deux disques d'une part inclinés par rapport à la verticale et d'autre part libres en rotation dans une position oblique par rapport au sens de déplacement du disque semeur. Ce dernier comporte donc un disque principal, réalisé comme un disque concave dans lequel, un deuxième disque se met au moins partiellement en prise. Le deuxième disque est réalisé avec un matériau flexible, de manière à absorber les déformations du disque principal pendant le travail et éviter ainsi toute perturbation du fonctionnement.

Avec un tel disque semeur on a constaté une pénétration de terre entre les deux disques au cours d'opérations de semis. Ceci peut, dans certaines conditions entraîner des perturbations de l'opération de semis.

L'objet de la présente invention vise donc à s'affranchir des inconvénients rencontrés dans l'état de la technique et à réaliser un soc à disques pour semoirs, susceptible de creuser un sillon optimal et homogène pour tout type de semis et dans diverses conditions d'utilisation, liées à la nature ou à l'humidité du sol, tout en conservant audit soc de semis une fiabilité et une tenue dans le temps acceptables.

Un autre objet de l'invention vise à réaliser un soc à disques peu sujet à des phénomènes de bourrage et / ou blocage.

Les objets assignés à la présente invention sont atteints notamment à l'aide d'un soc à disques caractérisé en ce qu'il est prévu, sur le disque principal et / ou sur le disque secondaire, un organe d'obturation destiné à obturer au moins dans le voisinage de la zone (A), la fente existant entre ledit disque principal et ledit disque secondaire.

Dans une réalisation avantageuse du soc à disque conforme à l'invention, les moyens de montage du disque secondaire comprennent un moyen élastique permettant audit disque secondaire de s'écarter élastiquement par rapport au disque principal.

D'autres particularités et avantages ressortiront plus en détails à la lecture de la description donnée ci-après, en référence aux dessins annexés à titre indicatif et non limitatif dans lesquels
- la figure 1, représente une vue latérale d'un dispositif d'implantation de graines dans le sol, comportant des socs à disques conformes à l'invention,
- la figure 2, représente une vue de dessus, en coupe selon des plans orthogonaux aux disques, d'un soc à disque conforme à l'invention,
- la figure 3, représente un autre mode de construction d'un soc à disques conforme à l'invention,

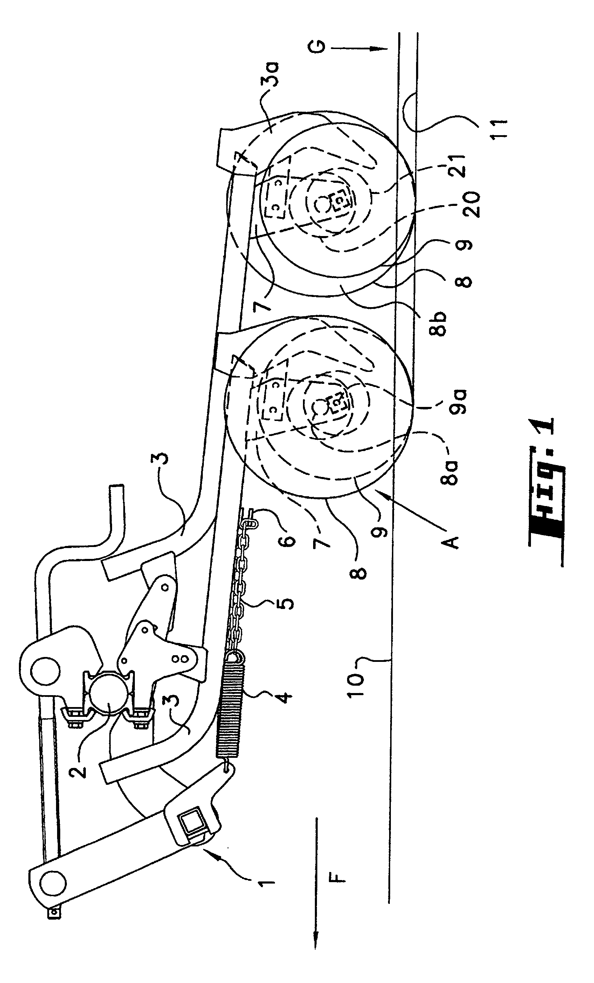

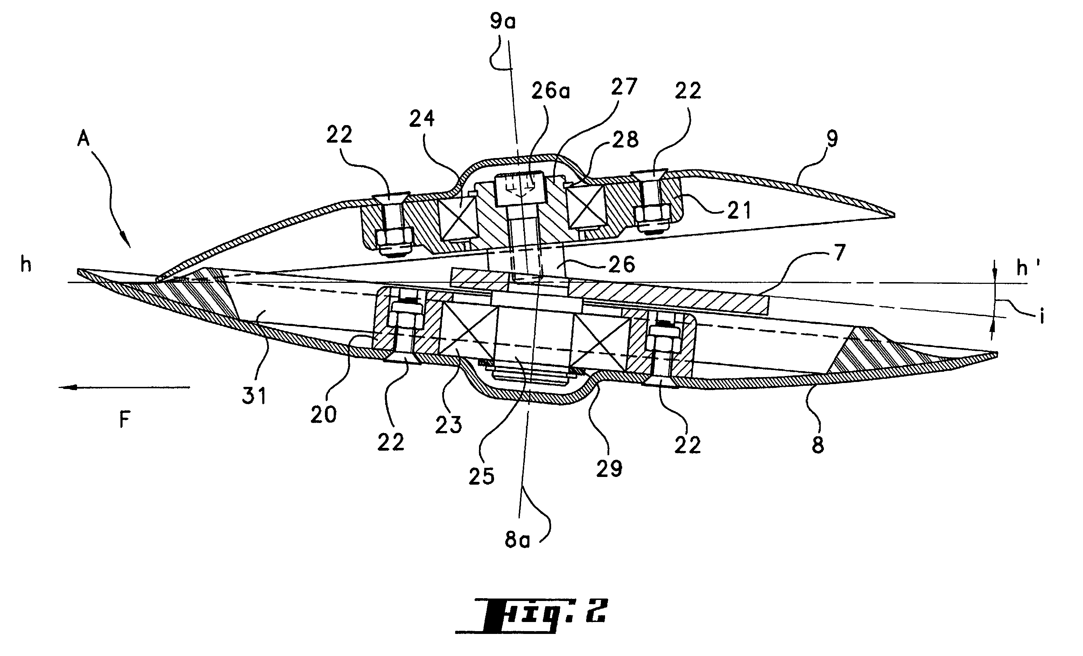

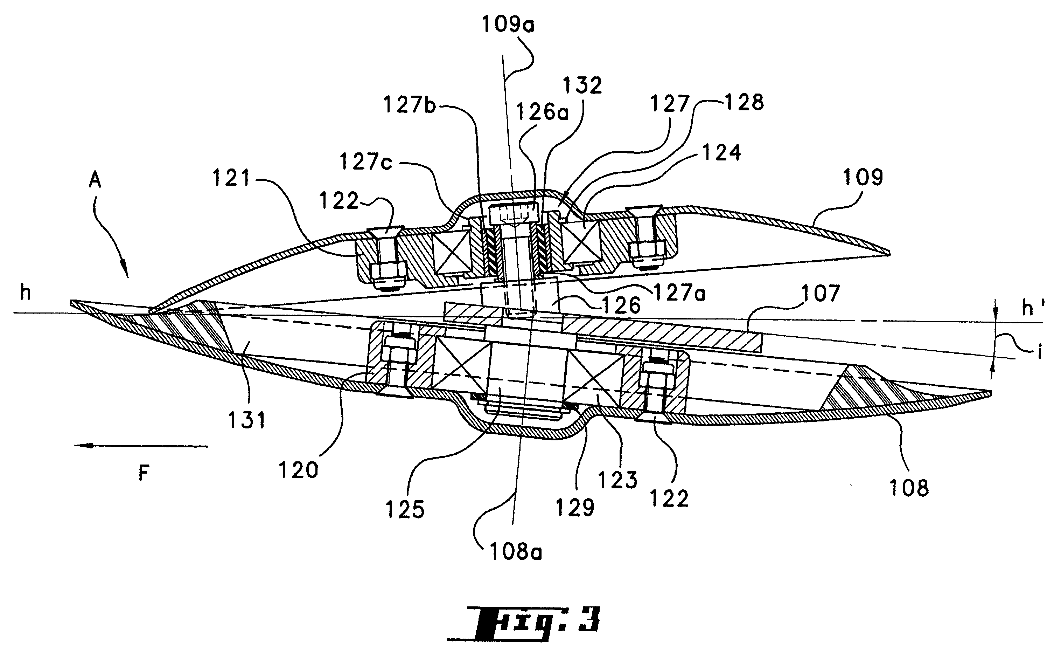

- les figures 3, 4, 5 et 6, représentent des modes complémentaires de construction d'un soc à disques conforme à l'invention,

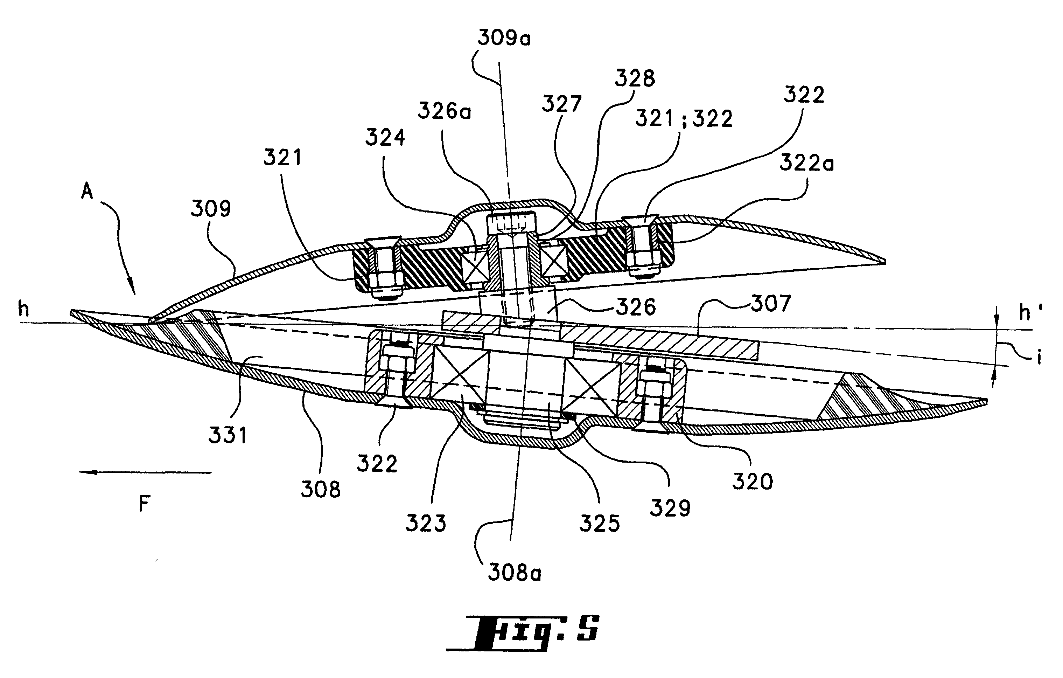

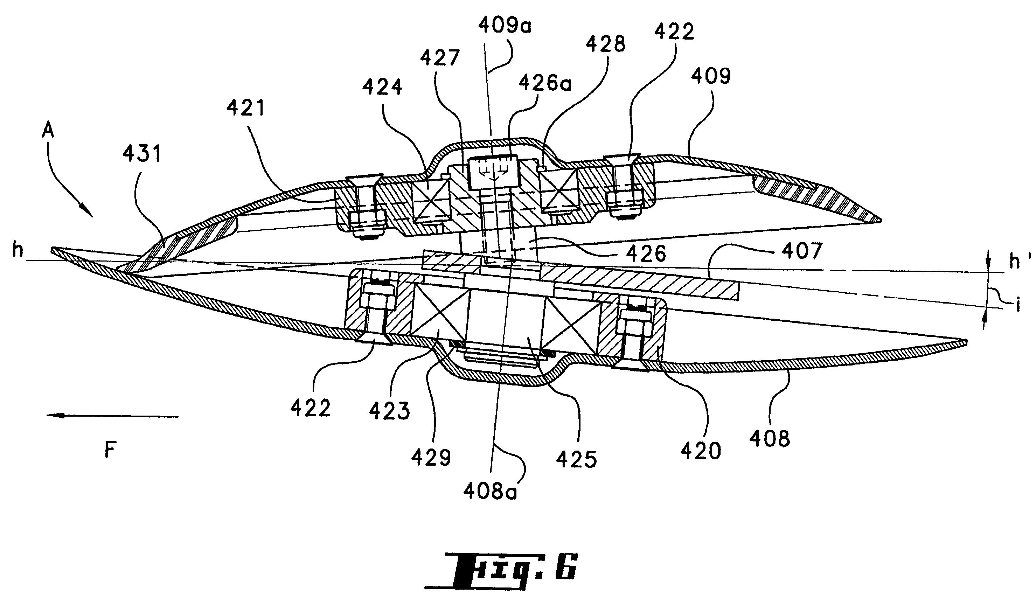

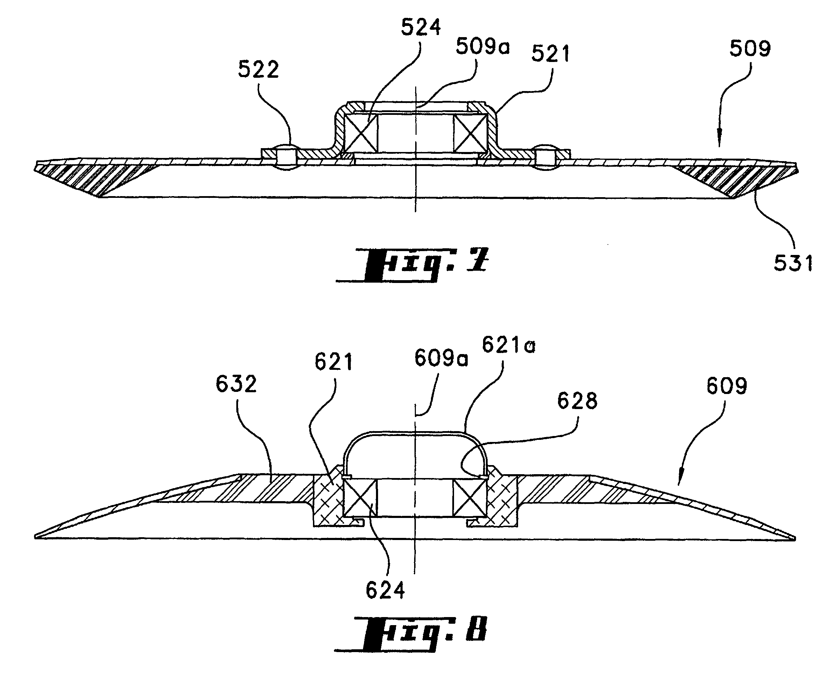

- les figures 7 et 8, représentent des vues partielles de modes de construction supplémentaires d'un soc à disques conforme à l'invention,

Dans la suite de la description, il sera fait allusion à divers modes de réalisation de l'invention. Ces modes de réalisation se rapportent souvent à une (des) pièce(s) ou à un (des) élément(s) isolé(s), les autres parties de la machine ou du dispositif conforme à l'invention restant identiques d'un mode de réalisation à l'autre.

Ainsi, lorsque l'on passe d'un mode de réalisation à un autre, ledit (lesdits) élément(s) ou ladite (lesdites) pièce(s) de la machine ou du dispositif conforme(s) à l'invention, porte(nt) la même dénomination et, est (sont) affecté(s) d'une référence augmentée ou diminuée d'un chiffre multiple de 100. La direction F, indiquée sur les figures correspond au sens d'avancement de la machine lors du travail et par conséquent du soc à disques conforme à l'invention.

La direction G, indiquée sur les figures, représente le sens allant vers le sol où sont implantées les graines lors d'opération de semis.

La figure 1 représente par exemple une partie d'un semoir comportant un dispositif d'implantation de graines dans le sol. Ce dispositif est pourvu de socs à disques conformes à l'invention. Le dispositif comprend un cadre (1), constitué d'une traverse (2), sur laquelle sont accrochés, par tous moyens connus, des tubes d'alimentation (3) servant à acheminer les graines d'une trémie (non représentée) vers des organes d'implantation (3a) desdites graines.

Chaque tube d'alimentation (3) est en outre relié à une partie du cadre (1) à l'aide d'un ressort (4) lequel est par exemple prolongé par une chaîne (5), accrochée à des moyens d'accrochage (6). Ces derniers, associés aux ressorts (4), autorisent un mouvement de pivotement vers le haut du soc à disques pour passer au-dessus d'un obstacle. La force de rappel du ressort (4) contribue ensuite au retour à une position et à une profondeur de semis optimales.

Les moyens d'accrochage (6), du type crochets, sont avantageusement agencés sous les tubes d'alimentation (3).

Les différents modes de réalisation du soc à disques conforme à l'invention représentée aux figures 2 à 8, sont tous susceptibles d'être agencés sur une machine agricole selon l'exemple schématisé à la figure 1. Une telle machine peut convenir pour des opérations de semis direct ou dans un sol avec divers degrés de préparation.

La figure 1 montre également un organe de soutien (7) supportant un disque principal (8; 108; 208; 308; 408) et un disque secondaire (9; 109; 209; 309; 409; 509; 609).

La figure 1 montre avantageusement deux socs à disques conformes à l'invention, dont le montage du disque principal (8) est inversé lorsque l'on passe d'un soc à l'autre. Si l'on se déplace dans le sens d'avancement (F), on rencontre d'abord un soc dont le disque secondaire (9) se trouve à gauche, et ensuite un soc dont le disque secondaire (9) se trouve à droite (en pointillés sur la figure). L'organe de soutien (7) correspondant est bien entendu agencé et orienté en conséquence. Un tel montage alterné peut servir à des fins de compréhension et d'illustration. En général les machines agricoles présentent soit un montage unique pour faciliter les opérations de remplacement de pièces défectueuses, soit un montage alterné des différents socs.

L'organe de soutien (7) est réalisé avec un flasque fixé par tous moyens sous le tube d'alimentation (3). Le disque principal (8; 108; 208; 308; 408) et le disque secondaire (9; 109; 209; 309; 409; 509; 609) sont montés libres en rotation sur l'organe de soutien (7), lequel présente à cet effet des axes matérialisant des axes de rotation principal (8a; 108a; 208a; 308a; 408a) et secondaire (9a; 109a ; 209a; 309a; 409a; 509a; 609a) pour lesdits disques. L'axe de rotation principal (8a; 108a; 208a; 308a; 408a) s'étend par exemple perpendiculairement à l'organe de soutien (7). Ce dernier présente à cet effet une orientation particulière, donnant au disque principal (8; 108; 208; 308; 408) une orientation optimale pour creuser un sillon (11).

Le disque principal (8; 108; 208; 308; 408) s'étend de préférence dans un plan oblique, orienté angulairement par rapport à un plan fictif vertical contenant la direction d'avancement (F) (figures 2 à 6). L'orientation angulaire présente avantageusement une composante horizontale, perpendiculaire au sens d'avancement (F), et représentant une inclinaison (i) de 5° environ.

Ainsi, selon l'une des figures 2 à 6, le plan d'extension du disque principal (8; 108; 208; 308; 408) est incliné par rapport à un axe (h-h') parallèle au sens d'avancement (F).

Le disque secondaire (9; 109; 209; 309; 409; 509; 609) présente une inclinaison opposée à celle du disque principal (8; 108; 208; 308; 408) de manière à former une zone (A) correspondant à la partie du soc servant à creuser le sillon (11). Les périphéries des disques (8; 108; 208; 308; 408, 9; 109; 209; 309; 409; 509; 609) se rejoignent dans la zone (A), située à l'avant dudit soc. L'inclinaison du disque secondaire (9; 109; 209; 309; 409; 509; 609) est obtenue de part son montage sur l'organe de soutien (7). Il en est de même pour le disque principal (8; 108; 208; 308; 408).

Avantageusement, le disque secondaire (9; 109; 209; 309; 409; 509; 609) présente vis-à-vis du disque principal (8; 108; 208; 308; 408), un diamètre inférieur d'une part, et un axe de rotation secondaire (9a; 109a; 209a; 309a; 409a; 509a; 609a) décalé et incliné par rapport à l'axe de rotation principal (8a; 108a; 208a; 308a; 408a) d'autre part.

Les disques, principal (8; 108; 208; 308; 408) et secondaire (9; 109; 209; 309; 409; 509; 609) sont également inclinés par rapport à la verticale de façon à ce que les périphéries desdits disques (8; 108; 208; 308; 408, 9; 109; 209; 309; 409; 509; 609) se rejoignent dans le bas du soc, selon la direction G dirigée vers le sol (10).

Un tel agencement permet aux périphéries des disques (8; 108; 208; 308; 408, 9; 109; 209; 309; 409; 509; 609) situées vers l'avant, en considérant la direction d'avancement (F), de se rapprocher. Un tel rapprochement est avantageux pour creuser et former le sillon (11), d'une part et pour éviter une pénétration de terre ou de débris de végétaux entre les disques (8; 108; 208; 308; 408, 9; 109; 209; 309; 409; 509; 609) d'autre part.

Le positionnement particulier du disque principal (8; 108; 208; 308; 408) vis-à-vis du disque secondaire (9; 109; 209; 309; 409; 509; 609), le diamètre plus faible et le décalage de l'axe de rotation secondaire (9a; 109a; 209a; 309a; 409a; 509a; 609a) du disque secondaire (9; 109; 209; 309; 409; 509; 609) présentent l'avantage non négligeable de nettoyer le disque principal (8; 108; 208; 308; 408) durant le travail. La périphérie du disque secondaire (9; 109; 209; 309; 409; 509; 609) située vers l'avant fait office de racloir au voisinage du côté interne (8b) du disque principal (8; 108; 208; 308; 408). Le côté interne (8b) du disque principal (8; 108; 208; 308; 408) correspond bien évidemment au côté en regard du disque secondaire (9; 109; 209; 309; 409; 509; 609).

Le tube d'alimentation (3) débouche dans l'organe d'implantation (3a). Ce dernier présente une extrémité venant s'engager entre le disque principal (8; 108; 208; 308; 408) et le disque secondaire (9; 109; 209; 309; 409; 509; 609) pour déposer les graines au fond du sillon (11).

Les caractéristiques de montage des disques (8, 9) notamment pour les figures 3 à 8 ne seront pas redécrites, dans la mesure où elles ne s'écartent pas des caractéristiques de montage des figures 1 et 2.

Le soc à disques conforme à l'invention présente donc un organe d'obturation (31 ; 131 ; 231 ; 331 ; 531), lequel s'étend pour l'essentiel entre le disque principal (8 ; 108 ; 208 ; 308) et le disque secondaire (9 ; 109 ; 209 ; 309 ; 509 ; 609). L'organe d'obturation (31 ; 131 ; 231 ; 331 ; 431 ; 531) est prévu sur l'un des disques (8 ; 108 ; 208 ; 308 ; 408, 9 ; 109 ; 209 ; 309 ; 409 ; 509 ; 609) et s'étend au moins localement jusque dans le volume interne généré par la forme de l'autre disque (8 ; 108 ; 208 ; 308 ; 408, 9 ; 109 ; 209 ; 309 ; 409 ; 509 ; 609).

L'organe d'obturation (31; 131; 231; 331; 431; 531) est avantageusement prévu sur l'un des disques (8 ; 108 ; 208 ; 308 ; 408, 9 ; 109 ; 209 ; 309 ; 409 ; 509 ; 609), l'autre desdits disques (8 ; 108 ; 208 ; 308 ; 408, 9 ; 109 ; 209 ; 309 ; 409 ; 509 ; 609) venant en contact avec ledit organe d'obturation (31 ; 131 ; 231 ; 331 ; 431; 531). Ce dernier présente par exemple une forme circulaire. Ainsi, l'organe d'obturation (31 ; 131 ; 231 ; 331 ; 431 ; 531) a par exemple la forme d'un anneau.

L'organe d'obturation (31 ; 131 ; 231 ; 331 ; 531) peut en outre avoir la forme d'un renflement.

Ledit organe d'obturation (31 ; 131 ; 231 ; 331 ; 431 ; 531) est avantageusement réalisé dans un matériau flexible. Ce dernier est avantageusement réalisé dans un matériau résistant à l'abrasion.

L'organe d'obturation (31 ; 131 ; 231 ; 331 ; 431) peut également être rapporté sur le disque (8 ; 108 ; 208 ; 308 ; 408, 9 ; 109 ; 209 ; 309 ; 409 ; 509 ; 609) correspondant, et ce par exemple par collage ou vulcanisation.

L'organe d'obturation (31 ; 131 ; 231; 331) est par exemple prévu sur le disque principal (8 ; 108 ; 208 ; 308).

Selon une réalisation avantageuse du soc à disques conforme à l'invention, au moins l'un desdits disques (8 ; 108 ; 208 ; 308 ; 408, 9 ; 109 ; 209 ; 309 ; 409 ; 509 ; 609) présente une forme concave. L'organe d'obturation (31 ; 131 ; 231 ; 331) est alors avantageusement prévu sur une face concave du disque correspondant (8 ; 108 ; 208 ; 308 ; 408, 9 ; 109 ; 209 ; 309 ; 409 ; 609).

Selon une réalisation avantageuse, le disque secondaire (9 ; 109 ; 209 ; 309 ; 409 ; 509 ; 609) s'étend au moins dans la zone (A), à l'intérieur du volume balayé par le disque principal (8 ; 108 ; 208 ; 308 ; 408).

La figure 2 notamment représente une vue de dessus, en coupe, d'un soc à disques conforme à l'invention. La coupe est prise selon des plans orthogonaux à chaque disque (8 ; 9) et passant par leur axe de rotation (8a ; 9a). Les plans de coupes sont donc inclinés l'un par rapport à l'autre. Dans cet exemple de réalisation, les disques, principal (8) et secondaire (9), présentent une forme sensiblement concave.

Les disques (8, 9) se rejoignent également à leur périphérie en allant dans le sens d'avancement (F), c'est-à-dire vers l'avant du soc.

Avantageusement, le disque principal (8 ; 108 ; 208 ; 308 ; 408) est monté sur l'organe de soutien (7 ; 107 ; 207 ; 307 ; 407) à l'aide de moyens de montage comprenant un palier principal (20 ; 120 ; 220 ; 320 ; 420) fixé sur ledit disque principal (8 ; 108 ; 208 ; 308 ; 408), un axe principal (25 ; 125 ; 225 ; 325 ; 425), et un roulement (23 ; 123 ; 223 ; 323 ; 423) lequel réalise l'interface entre ledit palier (20 ; 120 ; 220 ; 320 ; 420) et ledit axe principal (25 ; 125 ; 225 ; 325 ; 425).

Le disque secondaire (9 ; 109 ; 209 ; 309 ; 409 ; 509 ; 609) est monté sur l'organe de soutien (7 ; 107 ; 207 ; 307 ; 407) à l'aide de moyens de montage comprenant un palier secondaire (21; 121; 221 ; 321 ; 421 ; 521 ; 621) fixé sur ledit disque secondaire (9 ; 109 ; 209 ; 309 ; 409 ; 509 ; 609), un axe secondaire (26-26a-27 ; 126-126a-127 ; 226-226a-227 ; 326-326a-327 ; 426-426a-427) et un roulement (24 ; 124 ; 224 ; 324 ; 424 ; 524 ; 624), lequel réalise l'interface entre ledit palier (21 ; 121 ; 221 ; 321 ; 421; 521 ; 621) et ledit axe secondaire (26-26a-27 ; 126-126a-127 ; 226-226a-227 ; 326-326a-327 ; 426-426a-427).

Le disque principal (8) et le disque secondaire (9) sont pourvus respectivement du palier principal (20) et du palier secondaire (21). Chaque palier (20, 21) est fixé sur son disque (8, 9) respectif, à l'aide de moyens tels que des vis de fixation (22). Les paliers (20, 21) présentent des logements adéquats pour positionner des roulements, par exemple des roulements (23, 24) à billes ou à rouleaux, lesquels réalisent respectivement une interface avec un axe principal (25) et secondaire (26), centrés sur les axes de rotation principale (8a) et secondaire (9a).

Les roulements (23) et (24) sont avantageusement bloqués entre les paliers (20, 21) et les disques (8, 9) respectifs. Une pièce de montage (27) est par exemple rapportée et fixée sur l'axe secondaire (26), à l'aide d'une vis complémentaire (26a). L'axe secondaire (26) est fixé sur l'organe de soutien (7) et présente par exemple une section transversale rectangulaire ou circulaire. L'axe secondaire (26) présente également une orientation particulière destinée à donner une orientation optimale au disque secondaire (9) et à coopérer ainsi avec le disque principal (8).

La pièce de montage (27) présente une configuration lui permettant de recevoir le roulement (24). La pièce de montage (27) est également usinée de manière à retenir une bague d'arrêt (28), laquelle sert à bloquer le roulement (24). Le disque secondaire (9) et le palier secondaire (21) constituent donc un sous-ensemble tournant autour de l'axe de rotation (9a), lors de travaux de semis.

Le disque secondaire (9) est donc monté sur l'organe de soutien (7) à l'aide de moyens de montage comprenant, le palier (21) fixé sur ledit disque secondaire (9), l'axe secondaire (26) associé à la pièce de montage (27) et le roulement (24) réalisant l'interface entre ladite pièce de montage (27) et le palier (21).

Une autre bague d'arrêt (29) est par exemple utilisée pour bloquer le roulement sur l'axe principal (25). Un tel montage est connu en tant que tel.

La figure 2 montre également un matériau par exemple résistant à l'abrasion, rapporté sur l'un des disques (8, 9) de façon à obstruer sensiblement l'accès au volume intérieur défini par lesdits disques (8, 9). Le matériau en question, en l'occurrence l'organe d'obturation (31), présente par exemple une configuration du type anneau, agencé au voisinage de la périphérie intérieure du disque principal (8).

Le disque secondaire (9), et plus particulièrement sa périphérie, vient sensiblement en contact avec ledit anneau.

La périphérie du disque secondaire (9) vient en contact, ou quasiment en contact avec l'organe d'obturation (31) de manière à fermer la zone (A) d'attaque du soc à disques. On empêche par conséquent à la terre et / ou aux débris de végétaux de pénétrer entre les disques (8, 9). L'organe d'obturation (31) est par exemple fixé sur le disque principal (8) par tout moyen connu et notamment par, collage, vulcanisation, rivetage ou vissage.

Dans les exemples représentés aux figures 2 à 5, l'organe d'obturation (31) présente une forme adaptée à la forme concave du disque secondaire (9 ; 109 ; 209 ; 309), pour ne pas altérer une rotation dudit disque secondaire (9 ; 109 ; 209 ; 309), relativement au disque principal (8).

Selon un autre exemple de réalisation, l'un au moins des moyens de montage comprend également un moyen élastique (132 ; 232 ; 332 ; 632) permettant au disque correspondant de s'écarter par rapport à l'autre disque du soc.

Le moyen élastique (132) est constitué d'une bague élastique du type "silentbloc" que comporte l'axe correspondant (126-126a-127-132). Le moyen élastique (232 ; 632) peut également constituer une partie du palier (221 ; 621) correspondant.

Selon un autre mode de réalisation, le moyen élastique (332) constitue intégralement le palier (321) correspondant. Ce sont avantageusement les moyens de montage du disque secondaire (109 ; 209 ; 309 ; 609) qui comprennent le moyen élastique (132 ; 232 ; 332 ; 632).

Ainsi, la figure 3 notamment représente un autre mode de réalisation pour un soc à disques conforme à l'invention, dans lequel l'un au moins des moyens de montage du disque secondaire (109) comprend également le moyen élastique (132) permettant au disque secondaire (109) de s'écarter élastiquement par rapport au disque principal (108).

Le moyen élastique (132) (figure 3) fait la liaison entre une âme (127a) et une partie centrale (127b) de la pièce de montage (127). La partie centrale (127b) est solidarisée avec une enveloppe (127c) sur laquelle est monté le roulement (124).

Le moyen élastique (132), du type "silentbloc" et par conséquent l'âme (127a) et la partie centrale (127b) réalisent ainsi une articulation élastique. Le moyen élastique (132) est constitué par exemple d'un matériau de type élastomère.

L'élasticité et la flexibilité recherchée du montage sont par conséquent intégrées dans la pièce de montage (127) et permettent au disque secondaire (109), sous l'effet de contraintes, de s'écarter du disque principal (108) suivant l'axe de rotation (109a) et / ou suivant un axe perpendiculaire à l'axe de rotation (109a).

Le moyen élastique (132) permet également d'assurer une fermeture optimale de la zone (A), dans laquelle la périphérie du disque secondaire (109) peut exercer une faible pression sur l'organe d'obturation (131).

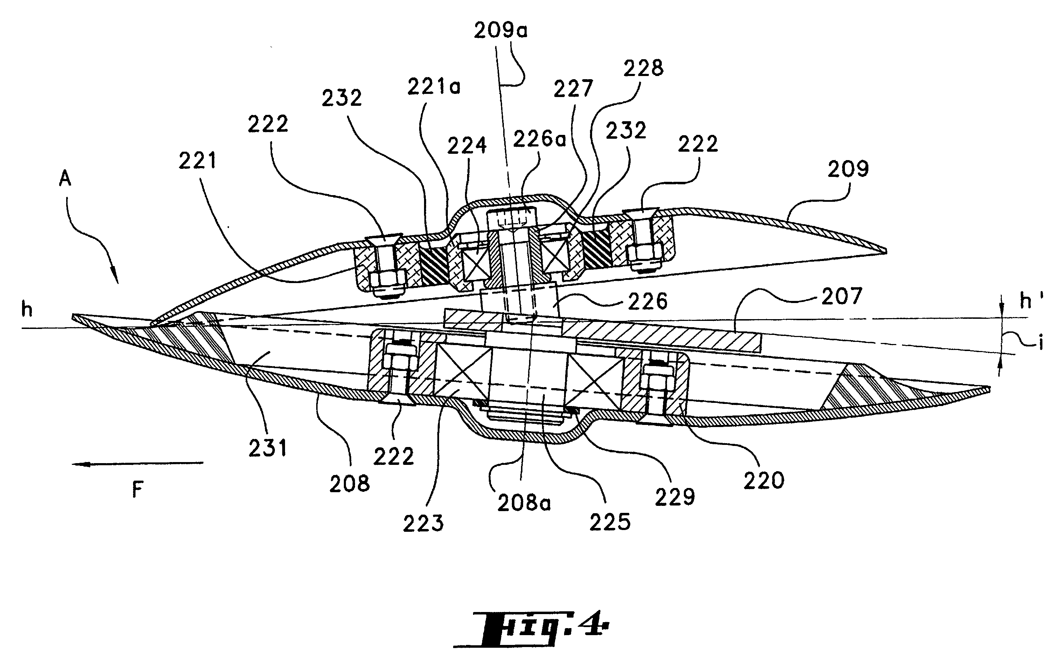

Dans l'exemple de réalisation représenté à la figure 4, le moyen élastique (232) est directement intégré au palier (221). Ce dernier présente donc une partie centrale (221a) entourant le roulement (224), lequel est monté sur la pièce de montage (227). La partie périphérique du palier (221) est fixée sur le disque secondaire (209) à l'aide des vis (222) et présente à cet effet une rigidité suffisante. La partie centrale (221a) est également réalisée avec un matériau rigide. Le moyen élastique (232) est dans ce cas constitué d'un matériau susceptible de lier de façon intime les parties rigides du palier (221). La flexibilité du moyen élastique (232) permet ainsi au disque secondaire (209) de s'écarter du disque principal (208), la partie centrale (221a) n'étant autorisée qu'à tourner autour de l'axe de rotation (209a). Le moyen élastique (232) présente par exemple une forme annulaire.

Selon un exemple complémentaire de réalisation d'un soc à disques conforme à l'invention, et représenté à la figure 5, le palier (321) constitue lui-même le moyen élastique (332). Le palier (321) est donc constitué intégralement d'un matériau flexible. Le palier (321) présente à cet effet une élasticité suffisante pour autoriser des écartements du disque secondaire (309). Les vis de fixation (322) sont avantageusement associées à des inserts tubulaires (322a) rigides, pour fixer de façon intime le palier (321) sur le disque secondaire (309). La tête de chaque vis de fixation (322) prend appui sur le disque secondaire (309) et l'écrou rapporté sur ladite vis (322) prend appui sur l'insert tubulaire (322a), tout en maintenant en place le palier (321). Une déformation élastique et réversible du palier (321) permet ainsi au disque secondaire (309) de s'écarter tout en conservant un montage ferme de la pièce de montage (327), associée au roulement (324), sur l'axe secondaire (326).

Cette solution présente l'avantage que l'on peut surmouler directement le roulement (324) sur le palier (321).

Selon un mode additionnel de réalisation de l'invention, représenté par exemple à la figure 6, le disque secondaire (409) est pourvu à sa périphérie d'une languette annulaire, avantageusement résistante à l'abrasion d'une part et souple ou flexible d'autre part. L'organe d'obturation (431) est ainsi constitué d'une lèvre ou d'une languette à la périphérie du disque (409) correspondant.

La languette vient directement en contact avec la face interne du disque principal (408). Un tel contact a pour conséquence de déformer légèrement la languette et permet d'obstruer la zone (A) d'attaque du sol (10).

La languette est de préférence fixée sur le disque secondaire (409) par tous moyens connus, et notamment par collage. L'utilisation d'une telle languette ou lèvre pour l'organe d'obturation (431) autorise un montage du disque secondaire (409) sans l'utilisation d'un moyen élastique supplémentaire.

La figure 7 représente un disque secondaire (509) de forme plane et circulaire. L'organe d'obturation (531), constitué d'un matériau souple, est rapporté sur la périphérie dudit disque (509) par tous moyens connus.

Le palier (521) rigide est fixé et centré à l'aide de vis (522) ou de rivets (figure 7) sur la face extérieure du disque secondaire (509), ladite face extérieure venant avec une bande périphérique, partiellement en contact avec une paroi du sillon (11). L'anneau (531) est rapporté sur l'autre face, située en regard du disque principal (non représenté dans cet exemple).

La figure 8 représente un autre exemple pour réaliser le soc disque conforme à l'invention. Ainsi, le disque secondaire (609) est constitué du palier (621), central, supportant le roulement (624). Ce dernier est bloqué en position grâce à la bague d'arrêt (628). Avantageusement un chapeau (621a) permet de recouvrir la zone de montage du roulement (624).

Le palier (621) est solidarisé au moyen élastique (632), lequel entoure ledit palier (621). La périphérie rigide du disque secondaire (609) est collée ou fixée par tous moyens sur la périphérie du moyen élastique (632). L'exemple représenté à la figure 8, montre une périphérie rigide de forme sensiblement concave ou plus précisément sensiblement tronconique. La périphérie rigide, laquelle vient en contact avec une paroi du sillon (11) est donc susceptible de s'écarter vis-à-vis du disque principal (non représenté sur cette figure), consécutivement à une déformation dudit disque principal ou à la présence de pierres ou autres débris risquant de se coincer entre les disques. L'élasticité de l'interface (moyen élastique (632)), entre la périphérie rigide et le palier (621) permet d'obtenir un fonctionnement optimal et une excellente adaptation à des conditions de travail diverses.

Un avantage appréciable est obtenu par le soc à disques conforme à l'invention, dans la mesure où une déformation du disque principal (8 ; 108 ; 208 ; 308 ; 408) ne risque pas de bloquer et / ou de déformer le disque secondaire (9 ; 109 ; 209 ; 309 ; 409 ; 509 ; 609), lesdits disques remplissant alors toujours leurs fonctions respectives.

Le matériau résistant à l'abrasion, notamment l'organe d'obturation (31 ; 131 ; 231 ; 331 ; 431 ; 531) est par exemple constitué de polyuréthanne. D'autres matériaux, par exemple souples ou flexibles, connus peuvent également convenir sans sortir du cadre de la présente invention.

Les disques (8 ; 108 ; 208 ; 308 ; 408 ; 9 ; 109 ; 209 ; 309 ; 409 ; 509 ; 609) où leur(s) partie(s) rigide(s) sont de préférence métallique(s), mais d'autres matériaux rigides de préférence peu sujet à l'abrasion peuvent également convenir.

## Revendications

1. Soc à disques pour semoir, comportant:
- un disque principal (8 ; 108 ; 208 ; 308 ; 408) pour creuser un sillon (11) dans le sol (10),
- un disque secondaire (9 ; 109 ; 209 ; 309 ; 409 ; 509 ; 609) pour garder ledit sillon (11) ouvert sur une distance suffisante pour déposer une ou plusieurs graines,
- un organe de soutien (7 ; 107 ; 207 ; 307 ; 407) supportant lesdits disques, lesquels sont montés libres en rotation et inclinés de manière que leurs périphéries se rejoignent dans une zone (A) localisée dans la partie avant basse dudit soc, qui sert à creuser le sillon (11),
***caractérisé en ce* qu'**il est prévu, sur le disque principal (8 ; 108 ; 208 ; 308 ; 408) et / ou sur le disque secondaire (9 ; 109 ; 209 ; 309 ; 409 ; 509 ; 609), un organe d'obturation (31 ; 131 ; 231 ; 331 ; 431 ; 531) destiné à obturer au moins dans le voisinage de la zone (A), la fente existant entre ledit disque principal (8 ; 108 ; 208 ; 308 ; 408) et ledit disque secondaire (9 ; 109 ; 209 ; 309 ; 409 ; 509 ; 609).

2. Soc à disques selon la revendication 1, ***caractérisé en ce* que** l'organe d'obturation (31 ; 131 ; 231 ; 331 ; 431 ; 531) s'étend pour l'essentiel entre le disque principal (8 ; 108 ; 208 ; 308 ; 408) et le disque secondaire (9 ; 109 ; 209 ; 309 ; 409 ; 509 ; 609).

3. Soc à disques selon la revendication 2, ***caractérisé en ce* que** l'organe d'obturation (31 ; 131 ; 231 ; 331 ; 431 ; 531) est prévu sur l'un des disques (8 ; 108 ; 208 ; 308 ; 408, 9 ; 109 ; 209 ; 309 ; 409 ; 509 ; 609) et s'étend au moins localement jusque dans le volume interne généré par la forme de l'autre disque (8; 108 ; 208 ; 308 ; 408, 9 ; 109 ; 209 ; 309 ; 409 ; 509 ; 609).

4. Soc à disques selon l'une quelconque des revendications 1 à 3, ***caractérisé en ce* que** l'organe d'obturation (31; 131 ; 231 ; 331 ; 431 ; 531) est prévu sur l'un des disques (8 ; 108 ; 208 ; 308 ; 408, 9 ; 109 ; 209 ; 309 ; 409 ; 509 ; 609) et que l'autre desdits disques (8 ; 108 ; 208 ; 308 ; 408, 9 ; 109 ; 209 ; 309 ; 409 ; 509 ; 609) vient en contact avec ledit organe d'obturation (31 ; 131;231;331;431;531).

5. Soc à disques selon l'une quelconque des revendications 1 à 4, ***caractérisé en ce* que** l'organe d'obturation (31 ; 131 ; 231 ; 331 ; 431 ; 531) a une forme circulaire.

6. Soc à disques selon la revendication 5, ***caractérisé en ce* que** l'organe d'obturation (31 ; 131 ; ;231 ;331 ;431 531), a la forme d'un anneau.

7. Soc à disques selon la revendication 5 ou 6, ***caractérisé en ce* que** l'organe d'obturation (31 ; 131 ; 231 ; 331 ; 431 ; 531), a la forme d'un renflement.

8. Soc à disques selon la revendication 5 ou 6, ***caractérisé en ce* que** l'organe d'obturation (431) est constitué d'une lèvre à la périphérie du disque (409) correspondant.

9. Soc à disques selon l'une quelconque des revendications 1 à 8, ***caractérisé en ce* que** l'organe d'obturation (31; 131; 231; 331; 431; 531) est réalisé dans un matériau flexible.

10. Soc à disques selon l'une quelconque des revendications 1 à 9, ***caractérisé en ce* que** l'organe d'obturation (31 ; 131 ; 231 ; 331 ; 531) est réalisé dans un matériau résistant à l'abrasion.

11. Soc à disques selon l'une quelconque des revendications 1 à 10, ***caractérisé en ce* que** l'organe d'obturation (31; 131 ; 231 ; 331 ; 431 ; 531) est rapporté sur le disque correspondant (8 ; 108 ; 208 ; 308 ; 408, 9 ; 109 ; 209 ; 309 ; 409 ; 509 ; 609).

12. Soc à disques selon la revendication 11, ***caractérisé en* ce que** l'organe d'obturation (31 ; 131 ; 231 ; 331 ; 431 ; 531) est rapporté sur le disque correspondent (8 ; 108 ; 208 ; 308 ; 408, 9 ; 109 ; 209 ; 309 ; 409 ; 509 ; 609) par collage ou vulcanisation.

13. Soc à disques selon l'une quelconque des revendications 1 à 12, ***caractérisé en ce* que** l'organe (31 ; 131 ; 231 ; 331) d'obturation est prévu sur le disque principal (8 ; 108 ; 208 ; 308).

14. Soc à disques selon l'une quelconque des revendications 1 à 13, ***caractérisé en ce que*** l'un au moins des disques (8 ; 108 ; 208 ; 308 ; 408, 9 ; 109 ; 209 ; 309 ; 409 ; 509 ; 609) présente une forme concave.

15. Soc à disques selon la revendication 14, ***caractérisé en ce* que** l'organe d'obturation (31 ; 131 ; 231 ; 331) est prévu sur la face concave du disque correspondant (8 ; 108 ; 208 ; 308 ; 408, 9 ; 109 ; 209 ; 309 ; 409 ; 509 ; 609).

16. Soc à disques selon l'une quelconque des revendications 1 à 15, ***caractérisé en ce* que** le disque secondaire (9 ; 109 ; 209 ; 309 ; 409 ; 509 ; 609) présente, vis-à-vis du disque principal (8 ; 108 ; 208 ; 308 ; 408), d'une part un diamètre inférieur et d'autre part un axe de rotation (9a ; 109a ; 209a ; 309a ; 409a ; 509a ; 609a) décalé par rapport à l'axe de rotation (8a ; 108a ; 208a ; 308a ; 408a) dudit disque principal.

17. Soc à disques selon l'une quelconque des revendications 1 à 16, ***caractérisé en ce* que** le disque secondaire (9 ; 109 ; 209 ; 309 ; 409 ; 509 ; 609), s'étend au moins dans la zone (A), à l'intérieur du volume balayé par le disque principal (8 ; 108 ; 208 ; 308 ; 408).

18. Soc à disques selon l'une quelconque des revendications 1 à 7, ***caractérisé en ce* que** l'organe de soutien (7 ; 107 ; 207 ; 307 ; 407) est fixé à un tube (3) d'alimentation en graines.

19. Soc à disques selon l'une quelconque des revendications 1 à 18, ***caractérisé en ce* que** le disque principal (8 ; 108 ; 208 ; 308 ; 408) est monté sur l'organe de soutien (7 ; 107 ; 207 ; 307 ; 407) à l'aide de moyens de montage comprenant un palier (20 ; 120 ; 220 ; 320 ; 420) fixé sur ledit disque principal (8 ; 108 ; 208 ; 308 ; 408), un axe principal (25 ; 125 ; 225 ; 325 ; 425) et un roulement (23 ; 123 ; 223 ; 323 ; 423) lequel réalise l'interface entre ledit palier (20; 120 ; 220 ; 320 ; 420) et ledit axe principal (25 ; 125 ; 225 ; 325 ; 425).

20. Soc à disques selon l'une quelconque des revendications 1 à 19, ***caractérisé en ce* que** le disque secondaire (9 ; 109 ; 209 ; 309 ; 409 ; 509 ; 609) est monté sur l'organe de soutien (7 ; 107 ; 207 ; 307 ; 407) à l'aide de moyens de montage comprenant un palier (21 ; 121 ; 221 ; 321 ; 421 ; 521 ; 621) fixé sur ledit disque secondaire (9 ; 109 ; 209 ; 309 ; 409 ; 509 ; 609), un axe secondaire (26-26a-27 ; 126-126a-127-132 ; 226-226a-227 ; 326-326a-327 ; 426-426a-427) et un roulement (24 ; 124 ; 224 ; 324 ; 424 ; 524 ; 624) lequel réalise l'interface entre ledit palier (21 ; 121 ; 221 ; 321 ; 421 ; 521 ; 621) et ledit axe secondaire (26-26a-27 ; 126-126a-127-132 ; 226-226a-227 ; 326-326a-327 ; 426-426a-427).

21. Soc à disques selon la revendication 19 ou 20, ***caractérisé en ce* que** l'un au moins desdits moyens de montage comprend également un moyen élastique (132 ; 232 ; 332 ; 632) permettant au disque correspondant (109 ; 209 ; 309 ; 609) de s'écarter élastiquement par rapport à l'autre disque (108 ; 208 ; 308).

22. Soc à disques selon la revendication 21, ***caractérisé en ce* que** le moyen élastique (132) est constitué d'une bague élastique du type "silentbloc" que comporte l'axe correspondant (126-126a-127-132).

23. Soc à disques selon la revendication 21, ***caractérisé en ce* que** le moyen élastique (232 ; 632) constitue une partie du palier correspondant (221 ; 621).

24. Soc à disques selon la revendication 21, ***caractérisé en ce* que** le moyen élastique (332) constitue intégralement le palier correspondant (321).

25. Soc à disques selon l'une quelconque des revendications 21 à 24, ***caractérisé en ce* que** seuls les moyens de montage du disque secondaire (109 ; 209 ; 309 ; 609) comprennent un moyen élastique (132 ; 232 ; 332 ; 632).

26. Semoir comportant au moins un soc à disques conforme à l'une quelconque des revendications 1 à 25.

27. Dispositif d'implantation de graines dans le sol, comportant au moins un soc à disques conforme à l'une quelconque des revendications 1 à 25.

## Claims

1. Disc coulter for a seed drill, comprising:
- a main disc (8; 108; 208; 308; 408) for digging a furrow (11) in the ground (10),
- a secondary disc (9; 109; 209; 309; 409; 509; 609) for keeping the said furrow (11) open over a long enough distance that one or more seeds can be deposited,
- a support element (7; 107; 207; 307; 407) supporting the said discs, which are mounted so that they can rotate freely and are inclined in such a way that their peripheries meet in a region (A) located in the lower front part of the said coulter, which serves to dig the furrow (11),
***characterized in* that** there is provided, on the main disc (8; 108; 208; 308; 408) and/or on the secondary disc (9; 109; 209; 309; 409; 509; 609) a plugging element (31; 131; 231; 331; 431; 531) intended to plug, at least in the vicinity of the region (A), the slot that there is between the said main disc (8; 108; 208; 308; 408) and the said secondary disc (9; 109; 209; 309; 409; 509; 609).

2. Disc coulter according to Claim 1, ***characterized in* that** the plugging element (31; 131; 231; 331; 431; 531) essentially extends between the main disc (8; 108; 208; 308; 408) and the secondary disc (9; 109; 209; 309; 409; 509; 609).

3. Disc coulter according to Claim 2, ***characterized in* that** the plugging element (31; 131; 231; 331; 431; 531) is provided on one of the discs (8; 108; 208; 308; 408, 9; 109; 209; 309; 409; 509; 609) and extends at least locally right into the internal volume generated by the shape of the other disc (8; 108; 208; 308; 408, 9; 109; 209; 309; 409; 509; 609).

4. Disc coulter according to any one of Claims 1 to 3, ***characterized in* that** the plugging element (31; 131; 231; 331; 431; 531) is provided on one of the discs (8; 108; 208; 308; 408, 9; 109; 209; 309; 409; 509; 609) and **in that** the other of the said discs (8; 108; 208; 308; 408, 9; 109; 209; 309; 409; 509; 609) comes into contact with the said plugging element (31; 131; 231; 331; 431; 531).

5. Disc coulter according to any one of Claims 1 to 4, ***characterized in* that** the plugging element (31; 131; 231; 331; 431; 531) is of circular shape.

6. Disc coulter according to Claim 5, ***characterized in* that** the plugging element (31; 131; 231; 331; 431; 531) is ring-shaped.

7. Disc coulter according to Claim 5 or 6, ***characterized in* that** the plugging element (31; 131; 231; 331; 431; 531) is shaped as a bulge.

8. Disc coulter according to Claim 5 or 6, ***characterized in* that** the plugging element (431) consists of a lip at the periphery of the corresponding disc (409).

9. Disc coulter according to any one of Claims 1 to 8, ***characterized in* that** the plugging element (31; 131; 231; 331; 431; 531) is made of a flexible material.

10. Disc coulter according to any one of Claims 1 to 9, ***characterized in* that** the plugging element (31; 131; 231; 331; 531) is made of an abrasion-resistant material.

11. Disc coulter according to any one of Claims 1 to 10, ***characterized in* that** the plugging element (31; 131; 231; 331; 431; 531) is attached to the corresponding disc (8; 108; 208; 308; 408, 9; 109; 209; 309; 409; 509; 609).

12. Disc coulter according to Claim 11, ***characterized in* that** the plugging element (31; 131; 231; 331; 431; 531) is attached to the corresponding disc (8; 108; 208; 308; 408, 9; 109; 209; 309; 409; 509; 609) by sticking or vulcanizing.

13. Disc coulter according to any one of Claims 1 to 12, ***characterized in* that** the plugging element (31; 131; 231; 331) is provided on the main disc (8; 108; 208; 308).

14. Disc coulter according to any one of Claims 1 to 13, ***characterized in* that** at least one of the discs (8; 108; 208; 308; 408, 9; 109; 209; 309; 409; 509; 609) is concave in shape.

15. Disc coulter according to Claim 14, ***characterized in* that** the plugging element (31; 131; 231; 331) is provided on the concave face of the corresponding disc (8; 108; 208; 308; 408, 9; 109; 209; 309; 409; 509; 609).

16. Disc coulter according to any one of Claims 1 to 15, ***characterized in* that** the secondary disc (9; 109; 209; 309; 409; 509; 609) has, with respect to the main disc (8; 108; 208; 308; 408), on the one hand, a smaller diameter and, on the other hand, an axis of rotation (9a; 109a; 209a; 309a; 409a; 509a; 609a) which is offset with respect to the axis of rotation (8a; 108a; 208a; 308a; 408a) of the said main disc.

17. Disc coulter according to any one of Claims 1 to 16, ***characterized in* that** the secondary disc (9; 109; 209; 309; 409; 509; 609) extends, at least in the region (A), into the volume swept by the main disc (8; 108; 208; 308; 408).

18. Disc coulter according to any one of Claims 1 to 7, ***characterized in* that** the support element (7; 107; 207; 307; 407) is fixed to a seed-supply tube (3).

19. Disc coulter according to any one of Claims 1 to 18, ***characterized in* that** the main disc (8; 108; 208; 308; 408) is mounted on the support element (7; 107; 207; 307; 407) using mounting means comprising a bearing block (20; 120; 220; 320; 420) fixed to the said main disc (8; 108; 208; 308; 408), a main shaft (25; 125; 225; 325; 425) and a bearing (23; 123; 223; 323; 423) which provides an interface between the said bearing block (20; 120; 220; 320; 420) and the said main shaft (25; 125; 225; 325; 425).

20. Disc coulter according to any one of Claims 1 to 19, ***characterized in* that** the secondary disc (9; 109; 209; 309; 409; 509; 609) is mounted on the support element (7; 107; 207; 307; 407) using mounting means comprising a bearing block (21; 121; 221; 321; 421; 521; 621) fixed to the said secondary disc (9; 109; 209; 309; 409; 509; 609), a secondary shaft (26-26a-27; 126-126a-127-132; 226-226a-227; 326-326a-327; 42b-426a-427) and a bearing (24; 124; 224; 324; 424; 524; 624) which provides an interface between the said bearing block (21; 121; 221; 321; 421; 521; 621) and the said secondary shaft (26-26a-27; 126-126a-127-132; 226-226a-227; 326-326a-327; 426-426a-427).

21. Disc coulter according to Claim 19 or 20, ***characterized in* that** at least one of the said mounting means also comprises an elastic means (132; 232; 332; 632) allowing the corresponding disc (109; 209; 309; 609) to part elastically from the other disc (108; 208; 308).

22. Disc coulter according to Claim 21, ***characterized in* that** the elastic means (132) consists of an elastic ring of the "silentbloc" type borne by the corresponding shaft (126-126a-127-132).

23. Disc coulter according to Claim 21, ***characterized in* that** the elastic means (232; 632) constitutes part of the corresponding bearing block (221; 621).

24. Disc coulter according to Claim 21, ***characterized in* that** the elastic means (332) fully constitutes the corresponding bearing block (321).

25. Disc coulter according to any one of Claims 21 to 24, ***characterized in* that** only the means of mounting the secondary disc (109; 209; 309; 609) comprise an elastic means (132; 232; 332; 632).

26. Seed drill comprising at least one disc coulter according to any one of Claims 1 to 25.

27. Device for planting seeds in the ground comprising at least one disc coulter according to any one of Claims 1 to 25.

## Patentansprüche

1. Scheibenschar für eine Sämaschine, das
- eine Hauptscheibe (8; 108; 208; 308; 408) zum Öffnen einer Furche (11) im Boden (10),
- eine Nebenscheibe (9; 109; 209; 309; 409; 509; 609) zum Offenhalten der Furche (11) über eine ausreichende Strecke zum Ablegen eines oder mehrerer Samen,
- ein Stützglied (7; 107; 207; 307; 407), das die Scheiben stützt, welche frei drehbar und geneigt so angebracht sind, dass sich ihre Umfänge in einem im unteren vorderen Teil des Schars befindlichen Bereich (A) treffen, der zum Öffnen der Furche (11) dient,
umfasst,
***dadurch gekennzeichnet,* dass** auf der Hauptscheibe (8; 108; 208; 308; 408) und/oder auf der Nebenscheibe (9; 109; 209; 309; 409; 509; 609) ein Verschlussglied (31; 131; 231; 331; 431; 531) vorgesehen ist, das zumindest in der Nähe des Bereichs (A) den zwischen der Hauptscheibe (8; 108; 208; 308; 408) und der Nebenscheibe (9; 109; 209; 309; 409; 509; 609) bestehenden Spalt verschließen soll.

2. Scheibenschar nach Anspruch 1, ***dadurch gekennzeichnet,* dass** sich das Verschlussglied (31; 131; 231; 331; 431; 531) im wesentlichen zwischen der Hauptscheibe (8; 108; 208; 308; 408) und der Nebenscheibe (9; 109; 209; 309; 409; 509; 609) erstreckt.

3. Scheibenschar nach Anspruch 2, ***dadurch gekennzeichnet,* dass** das Verschlussglied (31; 131; 231; 331; 431; 531) an einer der Scheiben (8; 108; 208; 308; 408, 9; 109; 209; 309; 409; 509; 609) vorgesehen ist und sich zumindest örtlich bis in das durch die Form der anderen Scheibe (8; 108; 208; 308; 408, 9; 109; 209; 309; 409; 509; 609) gebildete Innenvolumen erstreckt.

4. Scheibenschar nach irgend einem der Ansprüche 1 bis 3, ***dadurch gekennzeichnet* dass** das Verschlussglied (31; 131; 231; 331; 431; 531) an einer der Scheiben (8; 108; 208; 308; 408, 9; 109; 209; 309; 409; 509; 609) vorgesehen ist und dass die andere der Scheiben (8; 108; 208; 308; 408, 9; 109; 209; 309; 409; 509; 609) mit dem Verschlussglied (31; 131; 231; 331; 431; 531) in Berührung kommt.

5. Scheibenschar nach irgend einem der Ansprüche 1 bis 4, ***dadurch gekennzeichnet,* dass** das Verschlussglied (31; 131; 231; 331; 431; 531) kreisförmig ausgebildet ist.

6. Scheibenschar nach Anspruch 5, ***dadurch gekennzeichnet,* dass** das Verschlussglied (31; 131; 231; 331; 431; 531) ringförmig ausgebildet ist.

7. Scheibenschar nach Anspruch 5 oder 6, ***dadurch gekennzeichnet,* dass** das Verschlussglied (31; 131; 231; 331; 431; 531) als Verdickung ausgebildet ist.

8. Scheibenschar nach Anspruch 5 oder 6, ***dadurch gekennzeichnet,* dass** das Verschlussglied (431) aus einer Lippe am Umfang der entsprechenden Scheibe (409) besteht.

9. Scheibenschar nach irgend einem der Ansprüche 1 bis 8, ***dadurch gekennzeichnet,* dass** das Verschlussglied (31; 131; 231; 331; 431; 531) aus einem flexiblen Material hergestellt ist.

10. Scheibenschar nach irgend einem der Ansprüche 1 bis 9, ***dadurch gekennzeichnet,* dass** das Verschlussglied (31; 131; 231; 331; 531) aus einem abriebfesten Material hergestellt ist.

11. Scheibenschar nach irgend einem der Ansprüche 1 bis 10, ***dadurch gekennzeichnet,* dass** das Verschlussglied (31; 131; 231; 331; 431; 531) an der entsprechenden Scheibe (8; 108; 208; 308; 408, 9; 109; 209; 309; 409; 509; 609) angebracht ist.

12. Scheibenschar nach Anspruch 11, ***dadurch gekennzeichnet,* dass** das Verschlussglied (31; 131; 231; 331; 431; 531) durch Kleben oder Vulkanisieren an der entsprechenden Scheibe (8; 108; 208; 308; 408, 9; 109; 209; 309; 409; 509; 609) angebracht ist.

13. Scheibenschar nach irgend einem der Ansprüche 1 bis 12, ***dadurch gekennzeichnet,* dass** das Verschlussglied (31; 131; 231; 331) an der Hauptscheibe (8; 108; 208; 308) vorgesehen ist.

14. Scheibenschar nach irgend einem der Ansprüche 1 bis 13, ***dadurch gekennzeichnet* dass** mindestens eine der Scheiben (8; 108; 208; 308; 408, 9; 109; 209; 309; 409; 509; 609) eine konkave Form aufweist.

15. Scheibenschar nach Anspruch 14, ***dadurch gekennzeichnet,* dass** das Verschlussglied (31; 131; 231; 331) an der konkaven Fläche der entsprechenden Scheibe (8; 108; 208; 308; 408, 9; 109; 209; 309; 409; 509; 609) vorgesehen ist.

16. Scheibenschar nach irgend einem der Ansprüche 1 bis 15, ***dadurch gekennzeichnet*, dass** die Nebenscheibe (9; 109; 209; 309; 409; 509; 609) im Vergleich zur Hauptscheibe (8; 108; 208; 308; 408) einerseits einen kleineren Durchmesser und andererseits eine Drehachse (9a; 109a; 209a; 309a; 409a; 509a; 609a), die zur Drehachse (8a; 108a; 208a; 308a; 408a) der Hauptscheibe versetzt ist, aufweist.

17. Scheibenschar nach irgend einem der Ansprüche 1 bis 16, ***dadurch gekennzeichnet,* dass** sich die Nebenscheibe (9; 109; 209; 309; 409; 509; 609) zumindest im Bereich (A) in dem von der Hauptscheibe (8; 108; 208; 308; 408) durchquerten Volumen erstreckt.

18. Scheibenschar nach irgend einem der Ansprüche 1 bis 7, ***dadurch gekennzeichnet,* dass** das Stützglied (7; 107; 207; 307; 407) an einem Saatgutzuführrohr (3) befestigt ist.

19. Scheibenschar nach irgend einem der Ansprüche 1 bis 18, ***dadurch gekennzeichnet,* dass** die Hauptscheibe (8; 108; 208; 308; 408) mit Hilfe von Befestigungsmitteln, die ein an der Hauptscheibe (8; 108; 208; 308; 408) befestigtes Lager (20; 120; 220; 320; 420), eine Hauptachse (25; 125; 225; 325; 425) und ein Wälzlager (23; 123; 223; 323; 423), das die Grenzfläche zwischen dem Lager (20; 120; 220; 320; 420) und der Hauptachse (25; 125; 225; 325; 425) bildet, umfassen, am Stützglied (7; 107; 207; 307; 407) befestigt ist.

20. Scheibenschar nach irgend einem der Ansprüche 1 bis 19, ***dadurch gekennzeichnet,* dass** die Nebenscheibe (9; 109; 209; 309; 409; 509; 609) mit Hilfe von Befestigungsmitteln, die ein an der Nebenscheibe (9; 109; 209; 309; 409; 509; 609) befestigtes Lager (21; 121; 221; 321; 421; 521; 621), eine Nebenachse (26-26a-27; 126-126a-127-132; 226-226a-227; 326-326a-327; 426-426a-427) und ein Wälzlager (24; 124; 224; 324; 424; 524; 624), das die Grenzfläche zwischen dem Lager (21; 121; 221; 321; 421; 521; 621) und der Nebenachse (26-26a-27; 126-126a-127-132; 226-226a-227; 326-326a-327; 426-426a-427) bildet, umfassen, am Stützglied (7; 107; 207; 307; 407) befestigt ist.

21. Scheibenschar nach Anspruch 19 oder 20, ***dadurch gekennzeichnet,* dass** mindestens eines der Befestigungsmittel des weiteren ein elastisches Mittel (132, 232; 332; 632) umfasst, das gestattet, dass sich die entsprechende Scheibe (109; 209; 309; 609) von der anderen Scheibe (108; 208; 308) elastisch entfernen kann.

22. Scheibenschar nach Anspruch 21, ***dadurch gekennzeichnet,* dass** das elastische Mittel (132) aus einem elastischen "Silentblock"-Ring besteht, den die entsprechende Achse (126-126a-127-132) enthält.

23. Scheibenschar nach Anspruch 21, ***dadurch gekennzeichnet,* dass** das elastische Mittel (232; 632) einen Teil des entsprechenden Lagers (221; 621) bildet.

24. Scheibenschar nach Anspruch 21, ***dadurch gekennzeichnet,* dass** das elastische Mittel (332) integral das entsprechende Lager (321) bildet.

25. Scheibenschar nach irgend einem der Ansprüche 21 bis 24, ***dadurch gekennzeichnet,* dass** nur die Mittel zur Befestigung der Nebenscheibe (109; 209; 309; 609) ein elastisches Mittel (132; 232; 332; 632) umfassen.

26. Sämaschine mit mindestens einem Scheibenschar gemäß irgend einem der Ansprüche 1 bis 25.

27. Vorrichtung zum Einbringen von Saatgut in den Boden, die mindestens ein Scheibenschar gemäß irgend einem der Ansprüche 1 bis 25 umfasst.
